# EUROPÄISCHE PATENTSCHRIFT

(11) **EP 2 186 842 B1**
(45) Veröffentlichungstag und Bekanntmachung des Hinweises auf die Patenterteilung: **23.01.2013**
(21) Anmeldenummer: 08019979.7
(22) Anmeldetag: 15.11.2008
(51) Int. Cl.: C08J 9/28, C08J 9/32, C08G 59/18, C08J 9/00, C08J 9/12, C08G 59/22, C08G 59/50

(54) **Verwendung von nanoporösen Polymerschaumstoffen als Wärmedämm-Materialien**
Use of nano-porous polymer foams as heat insulating materials
Utilisation de mousses polymères nanoporeuses comme matériaux d'isolation thermique

(43) Veröffentlichungstag der Anmeldung: 19.05.2010
(73) Patentinhaber: Cognis IP Management GmbH, 40589 Düsseldorf (DE)
(72) Erfinder: Birnbrich Paul, 42179 Solingen (DE); Thomas, Hans-Joseph, 41352 Korschenbroich (DE); Balser, martina, 50529 Pulheim (DE)

(56) Entgegenhaltungen:
- GB-A- 2 355 465

## Beschreibung

### Gebiet der Erfindung

Die Erfindung betrifft Verwendung von bestimmten nanoporösen Polymerschaumstoffen als Wärmedämm-Materialien.

### Stand der Technik

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beschichtungsmassen (Aufbringung einer Deckschicht auf ein Substrat, zum Beispiel für Fußbodenbeschichtungen).

Das Dokument DE 37 30 823 A1 offenbart ein Verfahren zum Herstellen eines porösen Materials mit offenen Poren, umfassend die Schritte des Herstellens einer Emulsionsaufschlämmung durch heftiges Rühren einer Mischung, umfassend
i) ein Epoxyharz vom Glycidyltyp,
ii) einen ersten Härter, ausgewählt aus der Gruppe, bestehend aus modifizierten Polyaminhärtern, deren jeder durch Modifizieren eines Polyaminhärters mit einem Modifizierungsmittel hergestellt wird, Aminhärtern und Mischungen davon,
iii) einen zweiten Härter, ausgewählt aus der Gruppe von Polyamidhärtern,
iv) ein Fülllmittel und
v) Wasser,
des Giessens der besagten Aufschlämmung in eine wasserundurchlässige Gussform, und des Härtens der besagten Aufschlämmung, während sie Wasser enthält (siehe Anspruch 1). Dieses Verfahren entspricht einer Phaseninversionspolymerisation (PIP). Außerdem werden in der Tabelle 5 Polymerschaumstoffen offenbart, die einen durchschnittlichen Porendurchmesser von 200 nm, 500 nm, 700 nm bzw. 900 nm aufweisen (siehe Lauf-Nr. 5-8). In D2 wird eine Verwendung als Filtermaterialien beschrieben. Nirgends wird in D2 hingegen eine mögliche Verwendung zur Wärmedämmung offenbart.

### Beschreibung der Erfindung

Aufgabe der vorliegenden Erfindung war es, nanoporöse Polymerschaumstoffe bereitzustellen, die sich als Wärmedämm-Materialien eignen. Insbesondere sollten diese Materialien eine geringer Wärmeleitfähigkeit (vorzugsweise unterhalb von 0,09 W/m*K) und hohe mechanische Festigkeit (maximale Druckspannung vorzugsweise oberhalb von 1,0 Mpa) aufweisen.

Gegenstand der vorliegenden Erfindung ist die Verwendung von Verwendung von nanoporösen Polymerschaumstoffen, erhältlich durch Umsetzung von ein oder mehreren Epoxidharzen (E) mit einem amphiphilen Epoxidharzhärter (H) in Wasser im Sinne einer Phaseninversionspolymerisation (PIP), als Wärmedämm-Materialien.

Unter nanoporösen Polymerschaumstoffen sind Polymere zu verstehen, die innere Hohlräume aufweisen. Dabei handelt es sich um schwammartige Strukturen, die sowohl Makro- als auch Mikroporen aufweisen, wobei die Mikroporen dominieren und wobei die Mikroporen mittlere Querschnitte im Bereich von 10 bis 500 nm und insbesondere von 10 bis 100 nm aufweisen.

Die erfindungsgemäß einzusetzenden nanoporösen Polymerschaumstoffe zeichnen sich durch eine geringe Wärmeleitfähigkeit bei hoher mechanischer Festigkeit aus. Dies macht die Materialien in Hinblick auf die Verwendung als konstruktiven, mechanisch belastbaren Wärmedämm-Materialien besonders attraktiv.

### Zu den Epoxidharzen (E)

Bei den Epoxidverbindungen (E) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche.
Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).
Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt. Es können auch Polyglycidylether von Polycarbonsäuren als Verbindungen (F) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung von nanoporösen Polymerschaumstoffen, bei der man wie oben gesagt die erfindungsgemäßen Härter (H) in wässrigem Milieu mit Epoxidverbindungen (E) im Sinne einer Phaseninversionspolymerisation (PIP) umsetzt, können optional zusätzliche dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

### Zu den Epoxidharzhärtern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H) ein, die erhältlich sind, indem man eine Mischung enthaltend
(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

In einer Ausführungsform werden ausschließlich die Komponenten (A), (B) und (C) zu dem Zwischenprodukt umgesetzt und dieses weiter mit einem Polyamin (P) umgesetzt.

In einer weiteren Ausführungsform werden zur Herstellung des Zwischenproduktes, das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

### Zu den Verbindungen (A)

Unter **epoxidierten Polyethylenoxiden** werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter **epoxidierten Polypropylenoxiden** werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C 18 in der dem Fachmann bekannten Weise gestartet wird.

Unter **Polyethylenpropylenoxiden** werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

### Zu den Verbindungen (B)

Unter **Bisphenol-A-Epoxiden** werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Shell.

Die Molekulargewichte der eingesetzten Bisphenol-A-epoxide liegen vorzugsweise im Bereich von 380 bis 3000

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert . Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

### Zu den Verbindungen (C)

**Bisphenol-A** ist dem Fachmann einschlägig bekannt und wird durch folgende Formel charakterisiert:

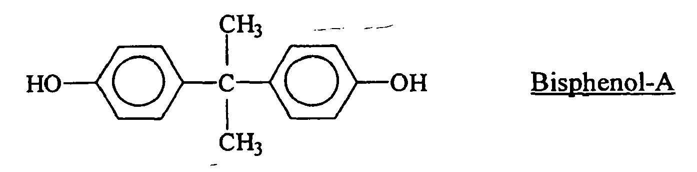

**Bisphenol-F** ist dem Fachmann ebenfalls einschlägig bekannt.

Die Verbindungen (C) können einzeln oder im Gemisch miteinander eingesetzt werden.

### Zu den Verbindungen (P)

Als **Polyamine (P)** kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

### Zur Herstellung des Zwischenproduktes

In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 1 bis 10:1 1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so dass die funktionelle Gruppe NH₂ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).
Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

### Zur Herstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, daß das Äquivalentverhältnis der reaktiven H-Atome an den A-minostickstoffatomen von (P) zu den Oxirangruppen in der Zwischenverbindung im Bereich von 4:1 1 bis 100:1 1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

### Zur Phaseninversiuonspolymerisation (PIP)

Unter Phaseninversionspolymerisation (PIP) ist folgendes zu verstehen: Man stellt zunächst eine wäßrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich selbstverständlich um das Epoxidharz.
Während der nun folgenden Umsetzung von Harz und Härter (Aushärtung im Sinne einer Polyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.
Nach vollständiger Aushärtung liegt nun eine poröse Polymermatrix vor, die in den Kavitäten die Wasserphase enthält. Die Wasserphase lässt sich gewünschtenfalls durch Trocknung entfernen, wobei luftgefüllte Kavitäten entstehen.
Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.

Zum einen kann das Reaktionssystem in eine abgeschlossene Form gegeben werden. Es ist auch möglich, das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie. Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren beginn mit der Bildung der W/O-Emulsion anzusetzen ist. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gewünschtenfalls können dem Reaktionssystem auch Verdicker zugesetzt werden.

Die Aushärtung des Reaktionssytems kann in einem breiten Temperaturbereich durchgeführt werden, vorzugsweise zwischen 1°C und 99°C und insbesondere zwischen 5 °C und 60 °C.

Im Gegensatz zu den üblichen Verfahren zur Herstellung von Polymerschäumen können den PIP-Reaktionssystemen auch Füllstoffe zugesetzt werden. Durch den Einsatz ausgewählter Füllstoffe lassen sich dabei sowohl die mechanischen Eigenschaften wie Druckfestigkeit, Biegefestigkeit, E-modul, Dichte als auch die Wärmeleitfähigkeit der erfindungsgemäßen nanoporöse Polymerschaumstoffe weiter modifizieren.

### Beispiele

### Abkürzungen

Im Folgenden bedeuten:
- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

### Verwendete Rohstoffe

- **Epoxidharz (E):**: Chem Res E20 (Cognis GmbH)
- **Füllstoffe:**: Glashohlkugeln K1 bzw. K25 (3M)
- **Glashohlkugeln K1**:: Fa. 3M Deutschland GmbH (dient als Füllstoff)
- **Glashohlkugeln K25:**: Fa. 3M Deutschland GmbH (dient als Füllstoff)

- **Härter (H):**: es wurden folgende Härter H1 bis h5 hergestellt:

### Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt. Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.
Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

### Härter H2

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 9 Stunden gerührt, bis die Epoxidzahl 3,81% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.
Es wurden 202,3g einer klaren bernsteinfarbigen Flüssigkeit erhalten mit einer Viskosität (in Substanz, Brookfield, 10Upm, 40°C) von 2110 mPas und einem Feststoffgehalt von 60%.

### Härter H3

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 5 Stunden gerührt, bis die Epoxidzahl 4,12% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 90,5g Wasser versetzt.
Es wurden 209,2g einer klaren braungelben Flüssigkeit erhalten mit einer Viskosität (in Substanz, Brookfield, 10Upm, 40°C) von 1440 mPas und einem Feststoffgehalt von 60%.

### Härter H4

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 8,9g Butandioldiglycidylether (EEW: 132) und 0,1g Triphenylphosphin gemischt. Die so erhaltene Mischung wurde auf 160°C erhitzt und bei dieser Temperatur über 2 Stunden gerührt bis ein Epoxidwert von 4,39 % erhalten wurde. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 91,7g Wasser versetzt.
Es wurden 211,9g einer klaren, hellgelben Flüssigkeit erhalten mit einer Viskosität (in Substanz, Brookfield, 10Upm, 40°C)von 2500 mPas und einem Feststoffgehalt von 60%.

### Härter H5

34,4g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A, 10,7g Hexandioldiglycidylether (EEW: 159,1) und 0,1g Triphenylphosphin gemischt. Die so erhaltene Mischung wurde auf 160°C erhitzt und bei dieser Temperatur über 2 Stunden gerührt bis eine Epoxidzahl von 4,37 % erhalten wurde. Anschließend wurde auf 60°C abgekühlt und bei dieser Temperatur 121,4g Diethylentriamin hinzugefiigt. Nach Abklingen der Exothermie wurde die Reaktionsmischung erneut für 2 Stunden auf 160°C erhitzt.
Der Überschuß an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 93,0g Wasser versetzt.
Es wurden 215,1g einer klaren, hellgelben Flüssigkeit erhalten mit einer Viskosität (in Substanz, Brookfield, 10Upm, 40°C) von 2080 mPas und einem Feststoffgehalt von 60%.

### Anwendungsbeispiele 1 bis 7

Epoxidharze (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzten Mengen an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Die Gesamtzeit vom Voremulgieren bis zur Verarbeitung betrug ca. 7 Minuten. Alle Versuche wurden mit einem Äquivalentverhältnis Epoxidharz zu Härter von 1 : 1 durchgeführt.

Die in den Beispielen 6 sowie 7 als Füllstoff verwendeten Glashohlkugeln wurden durch vorsichtiges Unterheben mit Hilfe eines Spatels eingebracht, um die Kugeln nicht zu zerstören.

Einzelheiten zu den Beispielen 1 bis 7 können der Tabelle 1 entnommen werden, die auch die Messdaten bezüglich Wärmeleitfähigkeit, Biege- und Druckfestigkeiten sowie der erhaltenen nanoporösen Polymerschaumstoffe enthält.

### Probenvorbereitung

Zur Herstellung der Prüfkörper für Biege- und Druckfestigkeitsmessungen wurden entsprechende Silikonformen, beschichtet mit dem Trennmittel T3 (Firma Ebalta), verwendet. Die Platten für die Wärmeleitfähigkeitsmessung wurden in einer Teflonform, beschichtet mit dem Trennmittel Loxiol G40 (Fa. Cognis), hergestellt. Die Gussmassen wurden bis zur Entformung abgedeckt, jedoch nicht Luftdicht verschlossen. Die Prüfkörper wurden nach 18h entformt, die Trocknung benötigte bei 23°C ca. 7 Tage und bei 55°C ca. 48h.

### Wärmeleitfähigkeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt. Dies ist eine Standardmessung für Wärmedämmstoffe. Die Platten wurden 7 Tage bei Raumtemperatur getrocknet und anschließend bei 55°C bis zur Massenkonstanz nachgetrocknet. Die Proben wurden vor der Messung mindestens 72h bei Raumtemperatur gelagert, eine spezielle Lagerung bei Normklima fand nicht statt.

### Bestimmung von Biege- und Druckfestigkeiten

Die Messung der Biege- und Druckfestigkeiten wurde in Anlehnung an DIN 53452 bzw. 53454 durchgeführt. Eine Lagerung bei Normklima fand nicht statt. Die Geometrieänderung der Probenkörper konnte nicht genau vorhergesagt werden und wurde deshalb nicht berücksichtigt. Als Messinstrument wurde eine Universalprüfmaschine von Instron, Typ 5565 mit der Software Bluehill 2.0, eingesetzt. Die Maße der Prüfkörper für die Biegeversuche waren Rechtecke mit 120mm x 10mm x 15mm und für die Druckversuche wurden zylindrische Prüfkörper der Maße 27mm Höhe und 12mm Durchmesser eingesetzt. Die Prüfgeschwindigkeiten sind den DIN zu entnehmen. Trocknungstemperaturen waren 23°C und 55°C.

**Tabelle 1 - Beispiele:**

| | **Beispiel 1** | **Beispiel 2** | **Beispiel 3** | **Beispiel 4** | **Beispiel 5** | **Beispiel 6** | **Beispiel 7** |
|---|---|---|---|---|---|---|---|
| **Härter H1 [g]** | 160,0 | 200,0 | 220,0 | 250,0 | 270,0 | 120 | 120 |
| **Epoxidharz Chem Res E20 [g]** | 145,1 | 181,3 | 199,5 | 226,7 | 244,8 | 108,8 | 108,8 |
| **Vollentsalztes Wasser [g]** | 297,6 | 288,3 | 243,5 | 208,2 | 163,2 | 223,2 | 223,2 |
| **Bindemittelgehalt [%]** | 40 | 45 | 50 | 55 | 60 | 40 | 40 |
| **Glashohlkugeln K1 [g]** | ohne | ohne | ohne | ohne | ohne | 27,12 | |
| **Glashohlkugeln K25 [g]** | | | | | | | 27,12 |
| **Füllstoffgehalt [%]** | | | | | | 15 | 15 |
| **Trocknungstemperatur Dichte [g/cm³]** | 23°C | 23°C | 23°C | 23°C | 23°C | 23°C | 23°C |
| | 0,47 | 0,51 | 0,57 | 0,64 | 0,58 | 0,32 | 0,39 |
| **Wärmeleitfähigkeit [W/m*K]** | 0,05183 | 0,06009 | 0,06716 | 0,07782 | 0,08314 | 0,0460 | 0,0526 |
| **Max. Druckspannung Mittelwert [MPa]** | 9,0 | 10,4 | 11,0 | 14,7 | 10,6 | 3,9 | 9,7 |
| **Max. Druckspannung Standardabw.[MPa]** | 2,4 | 1,4 | 0,7 | 1,1 | 1,1 | 0,1 | 0,8 |
| **Biege-E-Modul Mittelwert [Mpa]** | 99,4 | 196,4 | 296,2 | 381,9 | 332,8 | 248,6 | 368,2 |
| **Biege-E-Modul Standardabw. [Mpa]** | 6,0 | 25,4 | 22,3 | 3,5 | 21,7 | 11,0 | 36,7 |

| | | | | | | | |
|---|---|---|---|---|---|---|---|
| Hinweis: Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (145,1g). Vom eingesetzten Härter H1 sind, da er einen Feststoffgehalt von 60% aufweist, lediglich 0,6 x 160,0g = 96,0g zu berücksichtigen. Daraus ergibt sich die Menge des Bindemittels im System zu 96,0g + 145,1g = 241,1g. Das Gesamtsystem enthält zusätzlich 297,6 g Wasser, umfaßt mithin eine Gesamtmenge von 160g+145,1g+297,6g = 602,7g. Der Bindemittelanteil im Gesamtsystem ergibt sich daraus wie folgt: % Bindemittel = 241,1 x 100 / 602,7 = 40,00%. | | | | | | | |

## Patentansprüche

1. Verwendung von nanoporösen Polymerschaumstoffen, erhältlich durch Umsetzung von ein oder mehreren Epoxidharzen mit einem amphiphilen Epoxidharzhärter in Wasser im Sinne einer Phaseninversionspolymerisation, als Wärmedämm-Materialien.

2. Verwendung nach Anspruch 1, wobei man solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens einee aromatische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

3. Verwendung nach Anspruch 2, wobei man als Polyamin (P) Diethylentriamin einsetzt.

4. Verwendung Anspruch 2 oder 3, wobei man als Verbindungen (A) epoxidierte Polypropylenoxide einsetzt.

5. Verwendung nach einem der Ansprüche 2 bis 4, wobei man als Verbindungen (B) Bisphenol-A-Epoxide einsetzt.

6. Verwendung nach einem der Ansprüche 2 bis 5, wobei man als Verbindung (C) Bisphenol-A einsetzt.

## Claims

1. The use of a nanoporous polymer foam obtainable by reacting one or more epoxy resins with an amphiphilic epoxy resin hardener in water in a phase inversion polymerization as a thermal insulation material.

2. The use as claimed in claim 1, wherein epoxy resin hardeners used are hardeners obtainable by reacting a mixture comprising
(A) at least one epoxidized polyalkylene oxide, selected from the group of epoxidized polyethylene oxides, epoxidized polypropylene oxides, and polyethylene-propylene oxides,
(B) at least one epoxidized aromatic hydroxy compound selected from the group of bisphenol A epoxides and bisphenol F epoxides, and
(C) at least one aromatic hydroxy compound selected from the group of bisphenol A and bisphenol F
to give an intermediate, and then reacting this intermediate with a polyamine (P).

3. The use as claimed in claim 2, wherein diethylenetriamine is used as polyamine (P).

4. The use as claimed in claim 2 or 3, wherein epoxidized polypropylene oxides are used as compounds (A).

5. The use as claimed in any of claims 2 to 4, wherein bisphenol A epoxides are used as compounds (B).

6. The use as claimed in any of claims 2 to 5, wherein bisphenol A is used as compound (C).

## Revendications

1. Utilisation de mousses de polymères nanoporeuses, pouvant être obtenues par mise en réaction d'une ou plusieurs résines époxy avec un durcisseur amphiphile pour résines époxy dans de l'eau, dans le sens d'une polymérisation avec inversion de phase, en tant que matériaux d'isolation thermique.

2. Utilisation selon la revendication 1, dans laquelle on utilise des durcisseurs pour résines époxy, qui peuvent être obtenus par mise en réaction d'un mélange contenant
(A) au moins un polyoxyalkylène époxydé, choisi dans le groupe des polyoxyéthylènes époxydés, des polyoxypropylènes époxydés et des polyoxyéthylène-propylènes,
(B) au moins un composé hydroxylé aromatique époxydé choisi dans le groupe des époxydes de bisphénol A et des époxydes de bisphénol F et
(C) au moins un composé hydroxylé aromatique, choisi dans le groupe constitué par le bisphénol A et le bisphénol F
pour l'obtention d'un produit intermédiaire et ensuite mise en réaction de ce produit intermédiaire avec une polyamine (P).

3. Utilisation selon la revendication 2, dans laquelle on utilise comme polyamine (P) la diéthylènetriamine.

4. Utilisation selon la revendication 2 ou 3, dans laquelle on utilise comme composés (A) des polyoxypropylènes époxydés.

5. Utilisation selon l'une quelconque des revendications 2 à 4, dans laquelle on utilise comme composés (B) des époxydes de bisphénol A.

6. Utilisation selon l'une quelconque des revendications 2 à 5, dans laquelle on utilise comme composé (C) le bisphénol A.
